(19) Europäisches Patentamt
European Patent Office
Office européen des brevets

(11) **EP 4 686 044 A1**

(12) **EUROPEAN PATENT APPLICATION**

(43) Date of publication:
**28.01.2026 Bulletin 2026/05**

(21) Application number: **25183764.7**

(22) Date of filing: **18.06.2025**

(51) International Patent Classification (IPC):
*H02K 1/02* *(2006.01)*     *H02K 1/14* *(2006.01)*
*H02K 29/03* *(2006.01)*

(52) Cooperative Patent Classification (CPC):
**H02K 1/02; H02K 1/146;** H02K 29/03;
H02K 2213/03; H02K 2213/09

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.07.2024 JP 2024118458**

(71) Applicants:
• **SHINSHU UNIVERSITY**
**Matsumoto City, Nagano, 390-8621 (JP)**

• **Sanyo Denki Co., Ltd.**
**Toshima-ku, Tokyo 170-8451 (JP)**

(72) Inventors:
• **MIZUNO, Tsutomu**
**Nagano 380-8553 (JP)**
• **HORIUCHI, Manabu**
**Tokyo 170-8451 (JP)**

(74) Representative: **Mathys & Squire**
**Theatinerstraße 8**
**80333 München (DE)**

(54) **VARIABLE FLUX MOTOR**

(57)     What is provided is a variable flux motor being a synchronous or induction motor, including: a stator; and a rotor, in which the stator includes: a stator core; and a winding wound around the stator core, and at least a part of the stator includes a nonlinear soft magnetic material.

*FIG. 2*

EP 4 686 044 A1

**Description**

BACKGROUND

1. Technical Field

The present disclosure relates to a variable flux motor.

2. Related Art

In recent years, a motor has been required which is highly efficient over the entire range of torque and over the entire range of speed. However, in reality, it is difficult to achieve such a motor. Motors having a large amount of field flux generally have a high-efficiency region on a low speed, high torque side. Motors having a small amount of field flux have the high-efficiency region on a high speed, low torque side. The amount of field flux is a fixed value determined by permanent magnets embedded in a rotor. Hence, it was considered that motors having the high-efficiency region on each of the low speed, high torque side and the high speed, low torque side cannot be achieved.

Hence, variable flux motors that cause the amount of field flux to change during operation of the motor have been proposed in recent years. Various magnetic flux adjustment mechanisms have been proposed. Among them, a structure including a magnetic flux amount adjustment mechanism such as a mechanical system or an excitation coil for adjusting the magnetic field is referred to as an active variable flux structure. In contrast, a structure that does not require such an adjustment mechanism, in which the amount of field flux changes, following torque generated by a motor, to obtain a variable flux effect is referred to as a passive variable flux structure.

An example of the passive variable flux structure is proposed in JP-A-2017-17783. When a coil wound around an armature is energized in a motor described in JP-A-2017-17783, the magnetic flux of a permanent magnet leaks to an adjacent pole through a leak bypass path during low-load conditions having a small amount of armature current. Hence, the magnetic flux does not interlink with the armature. Hene, the amount of magnetic flux is reduced. As a result, the high-efficiency region is present on the high speed, low torque side. A magnetomotive force of an armature winding increases during high-load conditions having a large amount of armature current. As a result, the leak bypass path is saturated by the magnetic flux of the permanent magnet and the magnetic flux of the armature. Hence, the magnetic flux of the permanent magnet interlinks with the armature without leaking. Hence, the amount of magnetic flux increases. As a result, the high-efficiency region is present on the low speed, high torque side. In this manner, the motor described in JP-A-2017-17783 changes the state of magnetic flux simply with the magnitude of excitation current of the armature without including a special mechanism. Hence, the motor has a function of varying the magnetic flux passively. As a result, the high-efficiency region of the motor can be extended.

SUMMARY

A variable flux motor according to the present embodiment is a synchronous or induction motor and includes: a stator; and a rotor. The stator includes: a stator core; and a winding wound around the stator core, and at least a part of the stator includes a non-linear soft magnetic material.

BRIEF DESCRIPTION OF DRAWINGS

Fig. 1 is a horizontal cross-sectional view of a motor used in a reference example, which is orthogonal to a rotation axis of the motor;
Fig. 2 is a horizontal cross-sectional view of a motor according to the embodiment, which is orthogonal to a rotation axis of the motor;
Fig. 3 is a graph illustrating B-H curves of a linear soft magnetic material and a non-linear soft magnetic material;
Figs. 4A, 4B, and 4C are partial enlarged views of the motor of a first reference example, a motor of a second reference example, and the motor of the embodiment;
Fig. 5 is an efficiency map of the motor used in the first reference example;
Fig. 6 is an efficiency map of the motor according to the embodiment;
Fig. 7 is a diagram illustrating flux density distribution of the motor used in the first reference example during low-load conditions;
Fig. 8 is a diagram illustrating flux density distribution of the motor according to the embodiment during low-load conditions;

Fig. 9 is a diagram illustrating flux density distribution of the motor used in the first reference example during high-load conditions;

Fig. 10 is a diagram illustrating flux density distribution of the motor according to the embodiment during high-load conditions;

Fig. 11 is a graph illustrating B-H curves of a plurality of non-linear soft magnetic materials having different magnetic properties;

Fig. 12 is an efficiency map of the motor according to the embodiment, which uses a non-linear soft magnetic material S2;

Fig. 13 is an efficiency map of the motor according to the embodiment, which uses a non-linear soft magnetic material S3;

Fig. 14 is an efficiency map of the motor according to the embodiment, which uses a non-linear soft magnetic material S4;

Fig. 15 is a diagram illustrating a stator core of a motor according to a modification of the embodiment; and

Fig. 16 is a graph illustrating B-H curves of a non-linear soft magnetic material S1, the non-linear soft magnetic material S4, and a non-oriented electromagnetic steel plate.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

However, in the variable flux motor disclosed in JP-A-2017-17783, the magnetic flux leaking to the bypass path does not contribute to torque on the motor. Hence, the loss of magnetic energy occurs. As a result, there arises a problem of a reduction in maximum torque.

An object of the embodiment is to provide a variable flux motor that can suppress a reduction in maximum torque and can improve motor drive efficiency during low-speed, high-load conditions and during high-speed, low-load conditions without using an external circuit.

A variable flux motor according to an aspect of the present disclosure is a synchronous or induction motor and includes: a stator; and a rotor. The stator includes: a stator core; and a winding wound around the stator core, and at least a part of the stator includes a non-linear soft magnetic material.

According to the embodiment, it is possible to provide a stator including a variable flux structure being highly efficient during low-load conditions and during high-load conditions, and a variable flux motor including the stator.

The embodiment is described hereinafter with reference to the drawings. Note that descriptions of members having the same reference numerals as reference numerals of members already described are omitted in the detailed description for the sake of convenience. Moreover, the dimensions of each member illustrated in the drawings may be different from actual dimensions thereof for convenience of description.

Reference Example

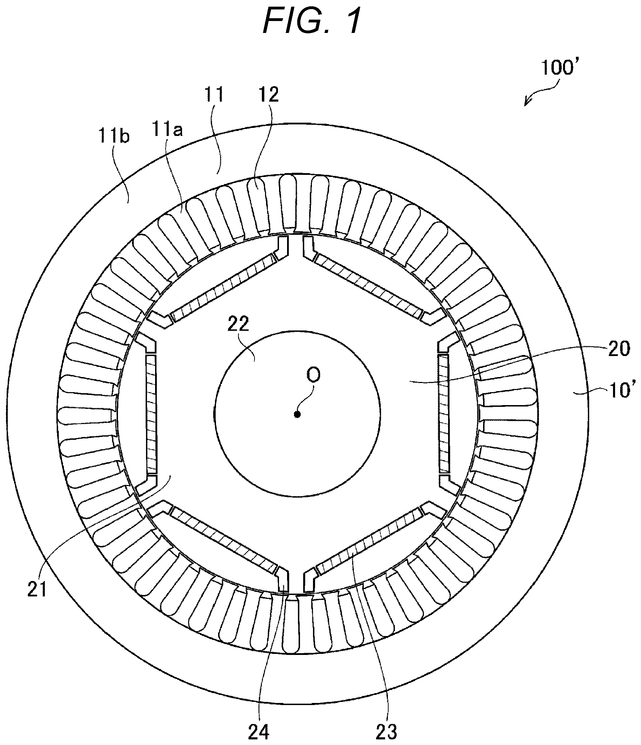

A motor 100' used in a reference example is described for comparison, using Fig. 1, to describe a motor 100 according to the embodiment in detail.

Fig. 1 is a horizontal cross-sectional view of the motor 100' used in the reference example, which is orthogonal to a rotation axis of the motor 100'. The motor 100' illustrated in Fig. 1 has an interior permanent magnet synchronous motor (IPMSM) structure with the number of slots per pole per phase q = 2.5, the structure having six poles, 45 slots, and three phases, and distributed winding. Moreover, the motor 100' is of a rotating field type. Furthermore, the motor 100' includes a stator 10' and a rotor 20 that can rotate relative to the stator 10'.

The stator 10' includes a ring-shaped stator core 11. The stator core 11 is formed of a plurality of electromagnetic steel plates laminated in a rotation axis direction (a direction perpendicular to the page of Fig. 1). Moreover, the stator core 11 includes electromagnetic steel plates being a soft magnetic material. In other words, the stator core 11 includes a ring-shaped back yoke (yoke portion) 11b and 45 teeth (pole portions) 11a placed on an inner peripheral side of the back yoke 11b. The teeth 11a are portions that protrude radially inward from a radially inner end of the back yoke 11b. The 45 teeth 11a have substantially the same shape. The teeth 11a are supported by the back yoke 11b. Slots are provided each between two adjacent teeth 11a. A winding is wound around each of the teeth 11a by use of a space secured by the slot. The windings form stator coils 12.

The stator coils 12 are wound around the teeth 11a, respectively, in a distributed winding form. The stator coils 12 are excited by alternating current from the outside.

The rotor 20 includes a rotor core 21. The rotor core 21 is formed of a plurality of electromagnetic steel plates laminated in the rotation axis direction.

Moreover, the rotor core 21 has a cylindrical shape. An inner peripheral surface of the rotor core 21 forms a shaft mounting hole 22. An unillustrated drive shaft is fixed in the shaft mounting hole 22. The drive shaft is supported by an unillustrated bearing and housing in such a manner as to be rotatable about the rotation axis.

The rotor 20 includes a plurality of rotor magnets 23 in the rotor core 21. The rotor magnets 23 are embedded in slots provided to the rotor core 21. The rotor magnets 23 include flat plate-shaped permanent magnets. The rotor magnets 23 have substantially the same size, material, and composition. Moreover, the plurality of rotor magnets 23 is placed in such a manner as to form six poles at positions 60° apart from one another on a circumference around a rotation center O. In other words, the rotor magnets 23 are spaced equally along the circumference. Therefore, magnetomotive forces for the stator coils 12 caused by the rotor magnets 23 are substantially the same. Moreover, two end portions of each of the rotor magnets 23 are each provided with a rotor air gap portion 24 extending radially outward. There is no member in the rotor air gap portions 24. Air is present in the rotor air gap portions 24. Note that permanent magnets can be adopted as the rotor magnets 23. Alternatively, electromagnets can also be adopted as the rotor magnets 23.

Embodiment

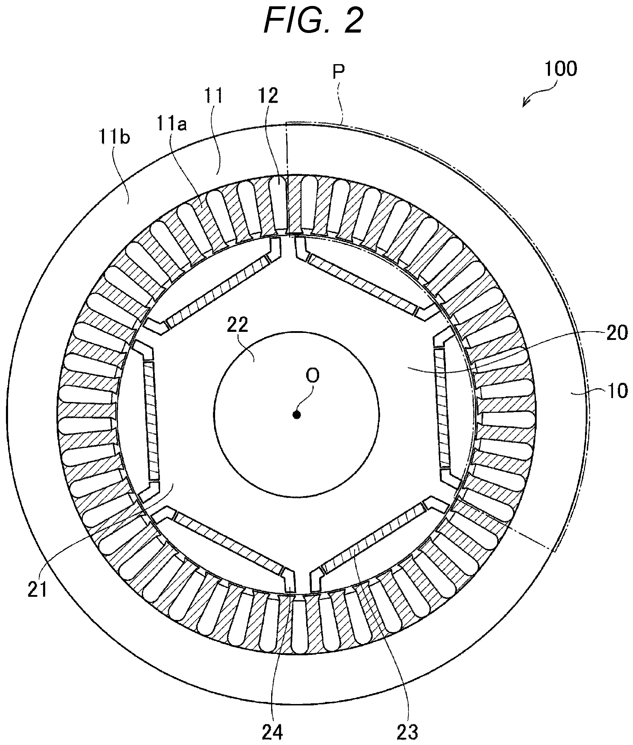

Fig. 2 is a horizontal cross-sectional view of the motor 100 according to the embodiment, which is orthogonal to a rotation axis of the motor 100. Only differences from the configuration of the motor 100' used in the reference example illustrated in Fig. 1 are described below.

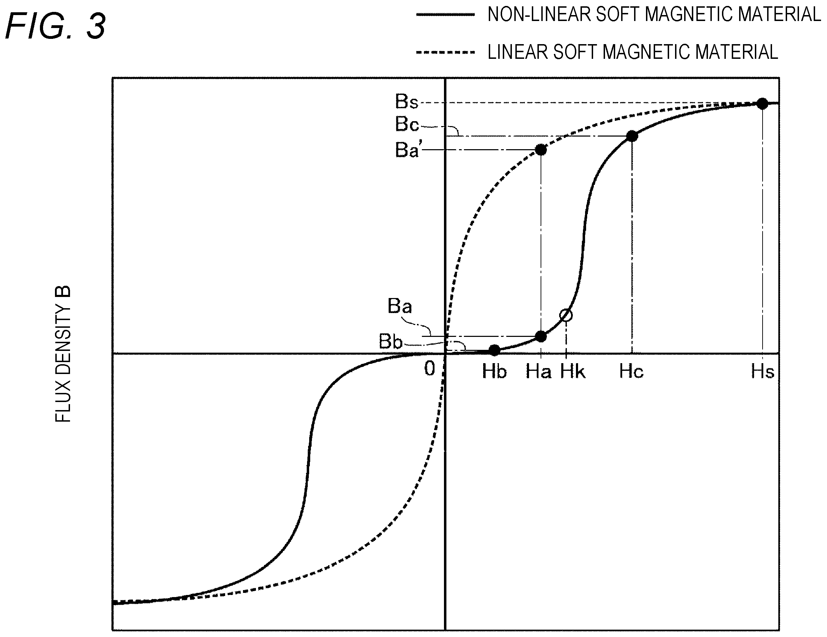

A stator 10 includes a ring-shaped stator core 11. The stator core 11 includes a ring-shaped back yoke 11b, and 45 teeth 11a. The back yoke 11b includes a non-oriented electromagnetic steel plate being a type of soft magnetic material. The teeth 11a include a non-linear soft magnetic material. In the embodiment, the non-linear soft magnetic material is defined as a material having the following properties: in other words, the non-linear soft magnetic material is not magnetized before a magnetic field having magnetic field strength H of a fixed value acts thereon (low flux density is maintained). On the other hand, if the magnetic field strength H exceeds the fixed value, relative permeability $\mu_r$ of the material increases. Hence, the flux density increases sharply. Here, the non-linear soft magnetic material is described in detail with reference to Fig. 3.

Fig. 3 is a graph illustrating B-H curves of a general soft magnetic material and a non-linear soft magnetic material. The horizontal axis of Fig. 3 represents the magnetic field strength H. The vertical axis represents flux density B. As illustrated in Fig. 3, in terms of the general soft magnetic material represented by, for example, a non-oriented electromagnetic steel plate, when the magnetic field acts, the flux density B increases steeply as can be observed around magnetic field strength H0. As the magnetic field strength H increases, the flux density B converges to saturation flux density Bs. In other words, in terms of the general soft magnetic material, when the magnetic field acts, the flux density B increases quickly. On the other hand, as the magnetic field strength H increases further, the degree of increase in the flux density B becomes gentler. The flux density B then converges to the saturation flux density Bs. Note that a material having high relative permeability $\mu_r$ and high saturation flux density Bs is generally developed as the soft magnetic material. Here, the relative permeability $\mu_r$ indicates the gradient of the graph of Fig. 3. Moreover, a material having the flux density B that increases quickly as the magnetic field acts is generally required for the electromagnetic steel plate being a type of soft magnetic material. In the following description, the general soft magnetic material is also referred to as the linear soft magnetic material for comparison with the non-linear soft magnetic material. As described above, the linear soft magnetic material has a property where the flux density B increases quickly even when a weak magnetic field acts.

In contrast, in terms of the non-linear soft magnetic material to which the inventor turned his attention, the flux density changes only gradually even when the magnetic field acts as can be observed around the magnetic field strength H0. However, when the magnetic field strength H reaches a fixed value Hk, the flux density B increases sharply. As the magnetic field strength increases further, the flux density B converges to the saturation flux density Bs. In other words, the flux density B of the non-linear soft magnetic material resists increasing while a weak magnetic field equal to or less than the fixed value is acting. On the other hand, if the strength H of a strong magnetic field equal to or greater than the fixed value acts, the flux density B increases sharply. To put another way, the non-linear soft magnetic material has the following properties: in other words, in terms of the non-linear soft magnetic material, when a magnetic field having the strength H of a weak magnetic field acts, the magnetic flux resists passing. On the other hand, when a magnetic field having the strength H of a strong magnetic field acts, the magnetic flux passes easily and sharply. In Fig. 3, the rising magnetic field Hk denotes the magnetic field strength at which the magnetic flux passes easily. On the B-H curves, the rising magnetic field Hk denotes the magnetic field strength corresponding to flux density of 25% of the saturation flux density of the non-linear soft magnetic material.

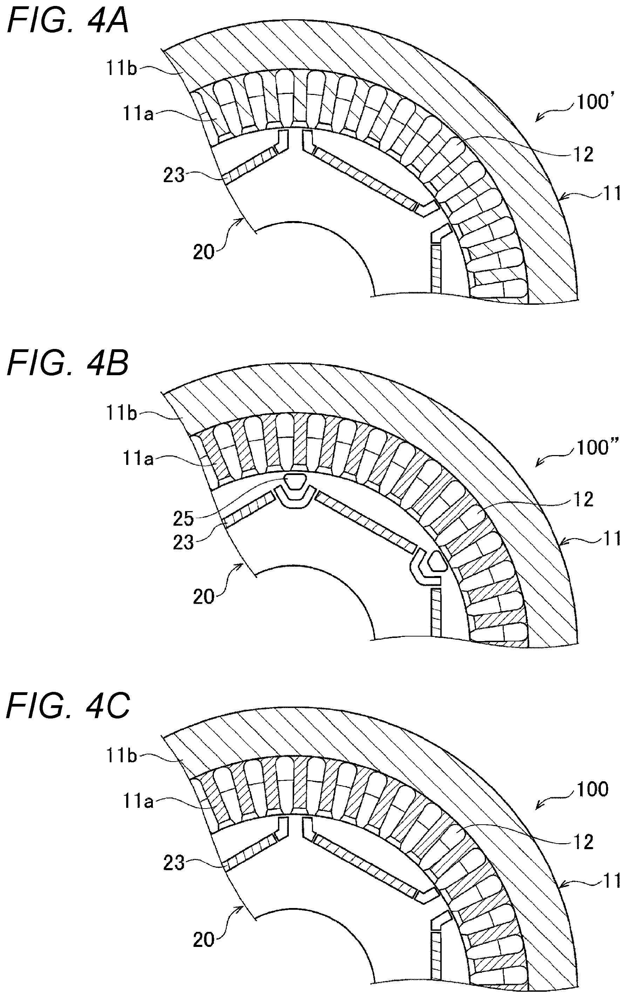

Fig. 4A is a partial enlarged view of the general motor 100' used in a first reference example, the motor 100' having magnetic reluctance that does not change. Fig. 4B is a partial enlarged view of a variable flux motor 100" of a passive variable reluctance type used in a second reference example described in JP-A-2017-17783. Fig. 4C is a partial enlarged view of the motor 100 according to the embodiment.

In the motor 100' of the first reference example having the magnetic reluctance that does not change, which is illustrated in Fig. 4A, each of the back yoke 11b and the teeth 11a includes the same linear soft magnetic material such as a non-oriented electromagnetic steel plate. In such a motor 100', the rotor magnets 23 used as field magnets are permanent magnets. In addition, the magnetic flux is fixed. Hence, as the rotor 20 operates at higher speed, an induced voltage increases. As a result, a drop in voltage is caused. Consequently, it becomes impossible to pass a current from a power supply side. Hence, the torque decreases. Therefore, in the motor 100' of the first reference example, a control method called vector control is generally used. In this control method, the phase of current is forwarded during high-speed drive. The magnetomotive force of the stator coils 12 produces a magnetic field in an opposite direction to a magnetic field of the rotor magnets 23 embedded in the rotor 20. As a result, field-weakening control that weakens the magnetic force of the rotor magnets 23 is applied. Consequently, the induced voltage is reduced, so that it is possible to pass a current. However, combined total current of current for field-weakening and current that contributes to the torque flows through the stator coils 12. Hence, as a result, excessive current flows, which leads to an increase in loss in a high-speed region.

Fig. 4B is a partial enlarged view of the motor 100" used in the second reference example. Leak bypass paths 25 are provided between poles formed by the rotor magnets 23 in the motor 100" of the second reference example. When the amount of current passing through the stator coils 12 is small, the magnetic flux of the rotor magnets 23 leaks to adjacent poles through the leak bypass paths 25 and do not interlink with the stator coils 12. Hence, it is possible to suppress a drop in voltage due to the induced voltage. In other words, when it is desired to drive the rotor 20 at high speed, it is possible to reduce the current for weakening the magnetic flux of the rotor magnets 23 (hereinafter referred to as the "weakening-field current"). Hence, the amount of current passing through the stator coils 12 is reduced. As a result, the efficiency in the high-speed region improves.

On the other hand, if the amount of current passing through the stator coils 12 is increased, the leak bypass paths 25 are saturated by the magnetic flux of the rotor magnets 23 and the magnetic flux of the stator coils 12. Hence, the magnetic flux of the rotor magnets 23 interlinks with the stator coils 12 without leaking to the leak bypass paths 25. Hence, when it is desired to drive the rotor 20 at high torque and at low speed, most of the magnetic flux of the rotor magnets 23 interlinks with the stator coils 12 as it is. Hence, it is possible to maintain high torque. In this manner, in the variable flux motor, the amount of magnetic flux of the rotor 20 is reduced during low-load conditions; therefore, the efficiency is improved. The magnetic flux of the rotor magnets 23 of the rotor 20 and the magnetic flux of the stator coils 12 are made the utmost use of during high-load conditions. In this manner, high torque is obtained. The state of the magnetic flux changes without a special mechanism but simply with the magnitude of the excitation current of the stator coils 12. Hence, the motor 100" has a passive variable flux function. Hence, the high-efficiency region of the motor is extended.

In this manner, it is possible to create high-efficiency regions on a high speed, low torque side and on a low speed, high torque side in the motor 100" of the second reference example illustrated in Fig. 4B. However, no small amount of the magnetic flux of the rotor magnets 23 always leaks to the leak bypass paths 25, which inevitably leads to a reduction in maximum torque relative to the motor 100' of the first reference example illustrated in Fig. 4A. In many cases, the specifications of an apparatus into which a motor is integrated, such as a robot or machine tool, determine the maximum torque required for the motor. Moreover, in many cases, the specifications of a module of an inverter also limit a current limit value. If the maximum torque of the motor decreases under such circumstances, the specifications of the apparatus or inverter into which the motor is integrated may not be satisfied. Moreover, the motor may not be able to be applied to the apparatus into which the motor is integrated. Hence, a variable flux motor is being required which does not have a reduction in maximum torque, is capable of highly efficient drive in a medium-speed region and in the high-speed region, and does not require an active variable flux mechanism. However, for this purpose, there remains a problem in which a special mechanism for variable flux needs to be provided.

Hence, as described above, the back yoke 11b includes the general linear soft magnetic material such as a non-oriented electromagnetic steel plate in the motor 100 of the embodiment illustrated in Fig. 4C. On the other hand, the teeth 11a include the non-linear soft magnetic material. Moreover, here, as illustrated in Fig. 3, magnetic field strength Ha of the rotor magnets 23 of the rotor 20 is set at less than the rising magnetic field Hk. Moreover, the sum of the magnetic field strength of the rotor magnets 23 of the rotor 20 and the maximum magnetic field strength of the stator coils 12 is set to be equal to or greater than magnetic field strength Hs of when the flux density B reaches the saturation flux density Bs.

If the motor is driven at high speed and at low torque, the amount of magnetic flux generated in the stator coils 12 is small as in the motor 100' and the motor 100". Hence, the magnetic flux of the rotor magnets 23 of the rotor 20 becomes predominant. In such a state, magnetic field strength Ha1 is low compared to the rising magnetic field Hk of the non-linear soft magnetic material used for the teeth 11a. In other words, flux density Ba1 of the teeth 11a is reduced. Therefore, when the rotor 20 is operating at high speed, the induced voltage of the stator coils 12 is reduced. Hence, it is possible to reduce the field-weakening current. Consequently, copper losses in the stator coils 12 can be reduced. Furthermore, the flux density does not increase in the teeth 11a unless magnetic field strength equal to or greater than a fixed magnitude acts. Hence, the flux density of the teeth 11a in a part of a region that contributes to the torque increases. On the other hand, it is possible to keep flux density of the other part that does not contribute to the torque low. Consequently, it is possible to reduce iron loss by the teeth 11a that do not contribute to the torque. Hence, the efficiency can be increased in total. In other words, the efficiency is increased in a low torque, high speed region.

Furthermore, the amount of current passing through the stator coils 12 increases during high-torque drive. Hence, magnetic field strength Ha2 acting on the teeth 11a is a combined total of the magnetic flux of the rotor magnets 23 and the magnetic flux of the stator coils 12. Hence, the sum total is greater than the rising magnetic field Hk of the non-linear soft magnetic material. As a result, the flux density of the teeth 11a increases. Consequently, it is possible to output high torque. In addition, the motor 100 of the embodiment is not provided with the leak bypass paths 25 in contrast to the motor 100" of the second reference example. Hence, the motor 100 can exert torque without a part of the magnetic flux of the stator coils 12 and the rotor magnets 23 leaking. Hence, the maximum torque is not reduced.

Note that flux density of when the magnetic field strength Ha of the rotor magnets 23 used for the rotor 20 is applied to a certain material is defined as Ba. Moreover, flux density of when magnetic field strength Hb half of Ha is applied is defined as Bb. Furthermore, flux density of when magnetic field strength Hc twice as strong as Ha is applied is defined as Bc. At this point in time, it is preferable that the non-linear soft magnetic material have a property that a ratio X = (Bc/Ba)/(Ba/Bb) is equal to or greater than five. It is more preferable that the non-linear soft magnetic material have a property that the ratio X is equal to or greater than 10.

The motor 100' of the above reference example and the motor 100 of the embodiment are compared by use of Fig. 3. The rotor magnets 23 of the rotor 20 cause the magnetic field strength Ha to act on the stator coils 12. If the stator coils 12 include the linear soft magnetic material, then the flux density of the stator coils 12 is Ba'. If the stator coils 12 include the non-linear soft magnetic material, then the flux density of the stator coils 12 is Ba. The flux density Ba is lower than flux density Ba'. Hence, a counter electromotive force resists increasing in the motor 100 of the embodiment. Hence, as described above, losses are small. In other words, high efficiency is achieved at low torque and at high speed.

Moreover, the magnetic field strength Hs of the stator coils 12 is applied while the stator coils 12 are energized to output high torque, upon which the flux density of the stator coils 12 is also the saturation flux density Bs even if the stator coils 12 include the linear soft magnetic material, or even if the stator coils 12 include the non-linear soft magnetic material. Hence, the maximum torque of the motor 100 of the embodiment is equal to that of the motor 100' of the reference example.

Note that it is preferable that in the motor 100 of the embodiment, the non-linear soft magnetic material used for the stator core 11 have the following properties (1) and (2):

Property (1)
If permanent magnets are adopted as the rotor magnets 23 integrated into the rotor core 21, the flux density of the permanent magnets is equal to or less than 30% of the saturation flux density Bs. Alternatively, if electromagnets are adopted as the rotor magnets 23 integrated into the rotor core 21, the flux density of the non-linear soft magnetic material of when the magnetomotive force of the electromagnets is applied is equal to or less than 30% of the saturation flux density Bs.
Property (2)
The flux density of the non-linear soft magnetic material of when the maximum magnetomotive force is applied by the stator coils 12 is equal to or greater than 80% of the saturation flux density Bs.

Moreover, on the B-H curves, the rising magnetic field Hk denotes the magnetic field strength of when the flux density B reaches 25% of the saturation flux density. Moreover, Hm denotes magnetic field strength of when the maximum relative permeability is achieved. At this point in time, it is preferable that the non-linear soft magnetic material used for the stator core 11 satisfy all relations of the following formulae (1) to (3):

$$\mathrm{Hk} \geq 100 \ [\mathrm{A/m}] \quad \mathrm{Formula} \ (1)$$

$$\mathrm{Hm} \geq 100 \ [\mathrm{A/m}] \quad \mathrm{Formula} \ (2)$$

$$\mathrm{Hm} > \mathrm{Hk} \qquad \mathrm{Formula} \ (3)$$

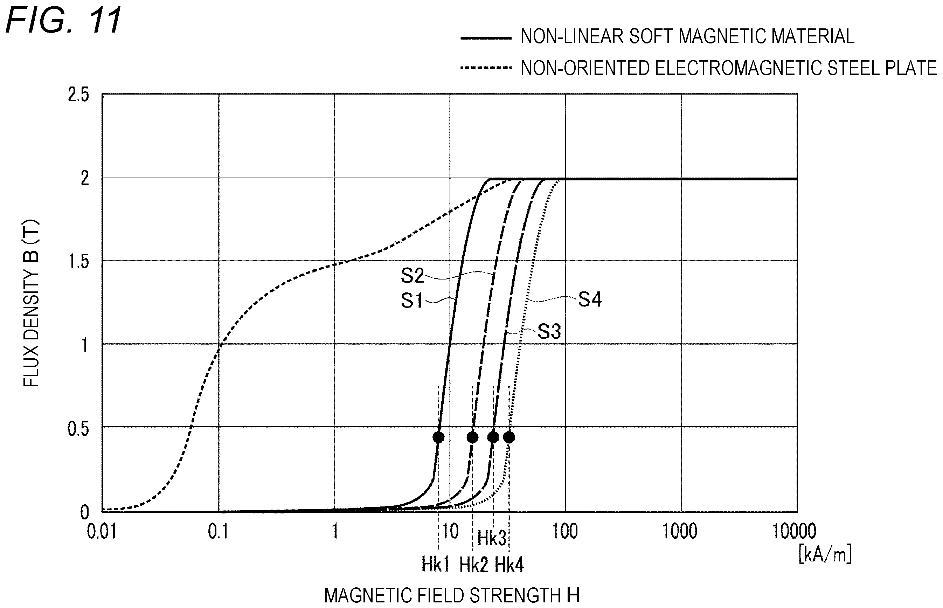

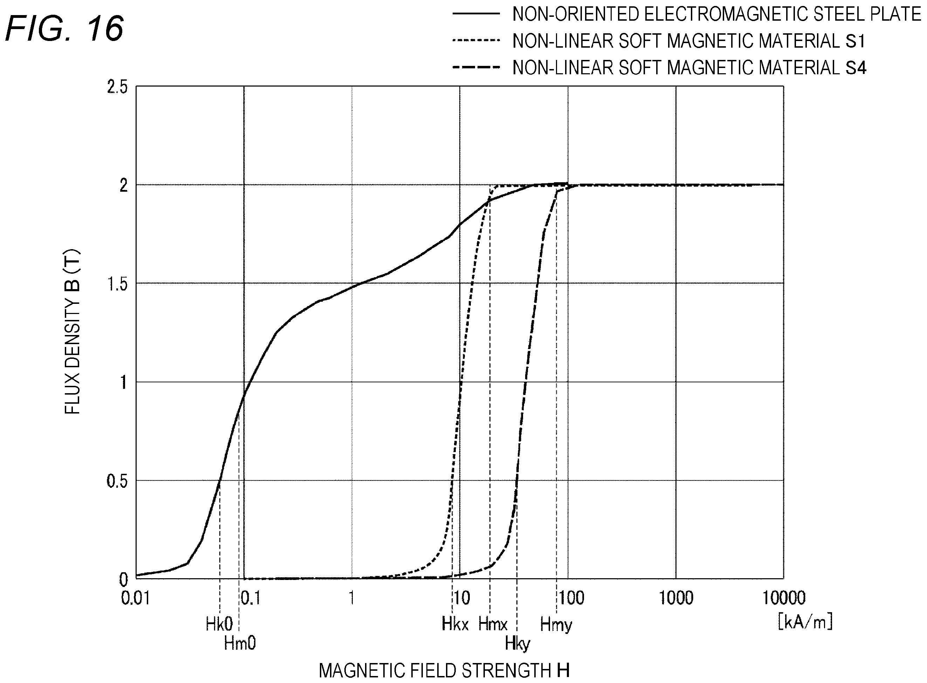

Again Fig. 16 illustrates B-H curves of a non-linear soft magnetic material S1, a non-linear soft magnetic material S4, and a non-oriented electromagnetic steel plate, which are described in Fig. 11. Table 1 presents the saturation flux density, the maximum relative permeability, Hk, and Hm of each of the non-linear soft magnetic material S1, the non-linear soft magnetic material S4, and the non-oriented electromagnetic steel plate. Upon calculating values presented in Table 1, a relational equation B = $\mu_r \mu_0$H is used. Here, B, $\mu_r$, $\mu_0$, and H denote as follows:

B: flux density [T]
$\mu_r$: relative permeability

$\mu_0$: vacuum permeability [H/m]
H: magnetic field strength [A/m]

[Table 1]

| | Non-linear soft magnetic material S1 | Non-linear soft magnetic material S4 | Non-oriented electromagnetic steel plate |
|---|---|---|---|
| Saturation flux density [T] | 2 | 2 | 0.06 |
| **25%** of saturation flux density [T] | 0.5 | 0.5 | 0.5 |
| Hk[A/m] | 9000 | 35000 | 60 |
| Maximum relative permeability | 92.84 | 23.21 | 7699 |
| Hm[A/m] | 15000 | 60000 | 80 |

As illustrated in Fig. 16 and Table 1, the non-linear soft magnetic material S1 and the non-linear soft magnetic material S4 satisfy all the relations of the above formulae (1) to (3). Specifically, a rising magnetic field Hkx of the non-linear soft magnetic material S1 is 9000 [A/m]. Magnetic field strength Hmx of when the maximum relative permeability is achieved is 15000 [A/m]. A rising magnetic field Hky of the non-linear soft magnetic material S4 is 35000 [A/m]. Magnetic field strength Hmy of when the maximum relative permeability is achieved is 60000 [A/m]. However, neither Hk nor Hm of the non-oriented electromagnetic steel plate does not reach 100 [A/m]. In other words, neither the relation of formula (1) nor the relation of formula (2) is not satisfied. Specifically, a rising magnetic field Hk0 of the non-oriented electromagnetic steel plate is 60 [A/m]. Magnetic field strength Hm0 of when the maximum relative permeability is achieved is 80 [A/m].

Both of the non-linear soft magnetic material S1 and the non-linear soft magnetic material S4 satisfy the relation of formula (1) and the relation of formula (2). In other words, Hk and Hm are sufficiently large. Hence, unless a strong magnetic field is caused to act from the outside, the magnetic flux resists passing. As a result, unless a strong magnetic field acts from the outside, the maximum relative permeability is not achieved. Hence, in a motor that uses the non-linear soft magnetic material S1 or the non-linear soft magnetic material S4 for the stator core 11, high efficiency is achieved at low torque and at high speed, which, in addition, does not lead to a reduction in maximum torque.

In contrast, it cannot be said that both of Hk and Hm of the non-oriented electromagnetic steel plate are sufficiently large. The magnetic flux is caused to pass simply by causing a weak magnetic field to act. Moreover, if a weak magnetic field is caused to act, the maximum relative permeability is achieved soon. Hence, in the motor that uses the non-oriented electromagnetic steel plate for the stator core 11, it is difficult to establish compatibility between high efficiency and suppression of a reduction in maximum torque, at low torque and at high speed.

Note that when the magnetic field is increased, if a material of which the relative permeability reaches to the maximum before reaching the rising magnetic field Hk is used, the operating principle of the above-mentioned motor according to the embodiment resists holding. In other words, it is preferable that a situation where the magnetic flux passes through the stator core 11 before the magnetomotive force of the stator coils 12 is applied thereto is avoided. Hence, it is preferable that the non-linear soft magnetic material used for the stator core 11 satisfies the relation of formula (3).
Efficiency Map

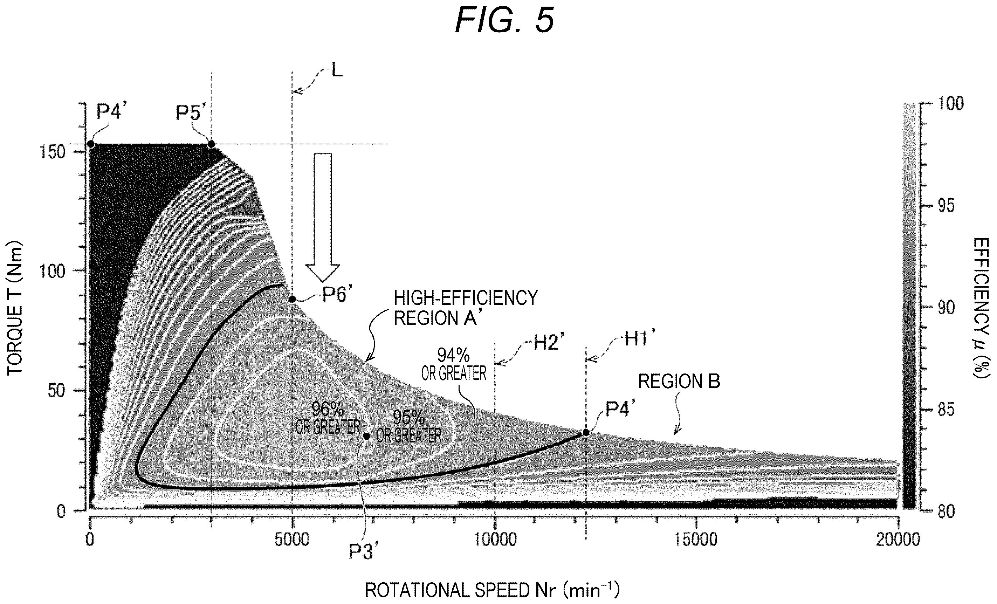

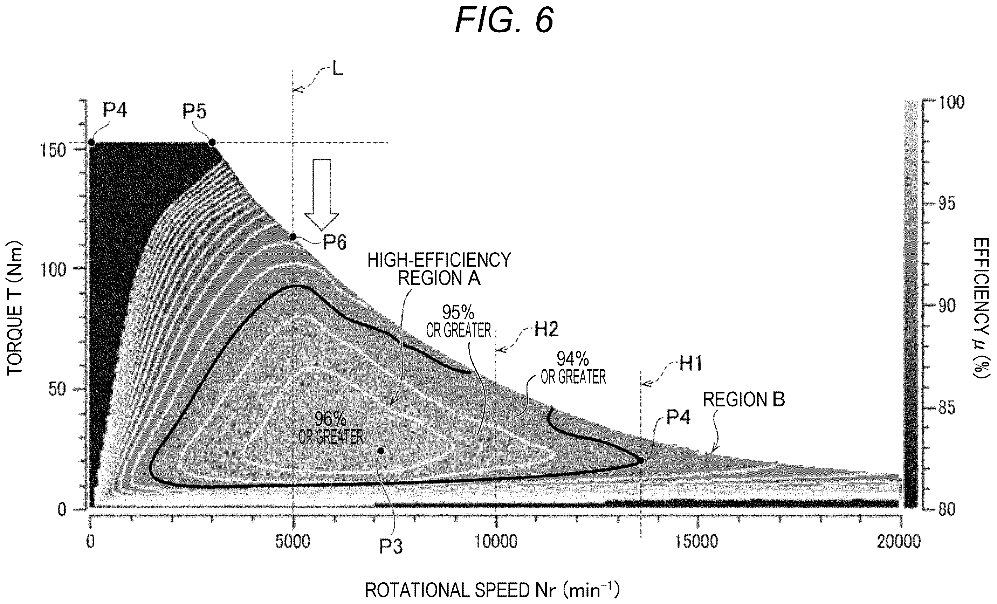

An efficiency map of the motor 100 according to the embodiment is described with reference to Figs. 5 and 6, using an efficiency map of the motor 100' used in the first reference example for comparison. Fig. 5 is an efficiency map of the motor 100' used in the first reference example. Fig. 6 is an efficiency map of the motor 100 according to the embodiment. The horizontal axis represents a rotational speed Nr of the motor in both Figs. 5 and 6. Moreover, the vertical axis represents the torque T. The density of each region in the efficiency maps represents efficiency $\mu$ of the motors. Moreover, a region of each of the efficiency maps is divided every 6% into, for example, a high-efficiency region A where the efficiency $\mu$ is equal to or greater than 94% and a region B where the efficiency $\mu$ is equal to or greater than 88% and less than 94%.

Note that the back yoke 11b and the teeth 11a include the non-oriented electromagnetic steel plate in the motor 100' used in the reference example. Moreover, the back yoke 11b includes the non-oriented electromagnetic steel plate in the motor 100 according to the embodiment. On the other hand, the teeth 11a include the non-linear soft magnetic material. Here, the expression, non-oriented, indicates a property that does not have a particular direction of magnetism but have random directions. The details of the non-oriented electromagnetic steel plate are described below.

As illustrated in Fig. 5, in the motor 100' used in the reference example, a high-efficiency region A' stays within a range of a rotational speed Nr of 12200 min$^{-1}$ or less (a region on the left side of a broken line H1' passing through a point P4' of Fig. 5). Moreover, during high-speed, low-load conditions where the rotational speed Nr is 10000 min$^{-1}$ or greater (a region on the right side of a broken line H2' of Fig. 5), the efficiency $\mu$ remains 94% or less.

Moreover, during low-speed, high-load conditions where the rotational speed Nr is 5000 min$^{-1}$ or less (a region on the left side of a broken line L of Fig. 5), the efficiency $\mu$ decreases sharply from a point P5' where maximum torque Tmax is 150 Nm and the rotational speed Nr is 3000 min$^{-1}$ to a point P6' where the rotational speed Nr is 5000 min$^{-1}$.

In contrast, as illustrated in Fig. 6, in the motor 100 according to the embodiment, the high-efficiency region A extends to a range of a rotational speed Nr of 13500 min$^{-1}$ or less (a region on the left side of a broken line H1 passing through a point P4 of Fig. 6). Moreover, also during high-speed, low-load conditions where the rotational speed Nr is 10000 min$^{-1}$ or greater (a region on the right side of a broken line H2 of Fig. 6), the efficiency $\mu$ is 95% or less. In other words, high efficiency is achieved also in this region.

Moreover, during low-speed, high-load conditions where the rotational speed Nr is 5000 min$^{-1}$ or less (a region on the left side of a broken line L of Fig. 6), the maximum torque Tmax is 150 Nm. The efficiency $\mu$ decreases gradually from a point P5 where the rotational speed Nr is 3000 min$^{-1}$ to a point P6 where the rotational speed Nr is 5000 min$^{-1}$.

Therefore, the high-efficiency region A extends further in the motor 100 according to the embodiment than in the motor 100' used in the reference example. Flux Density Distribution

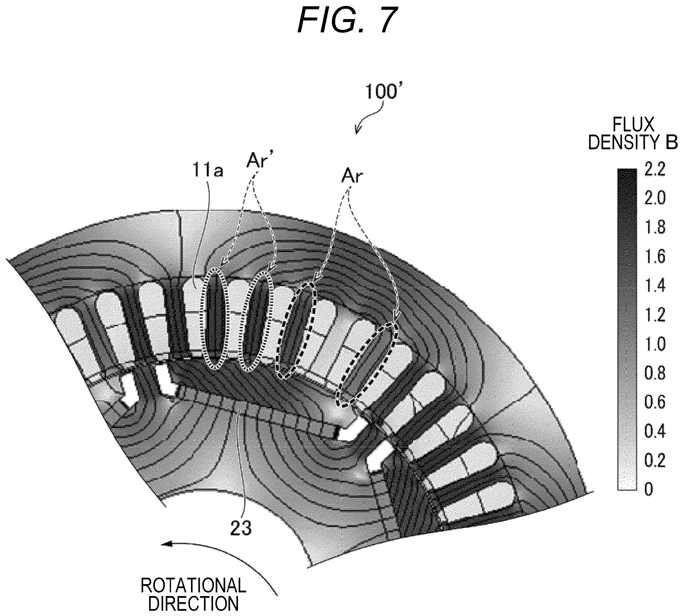

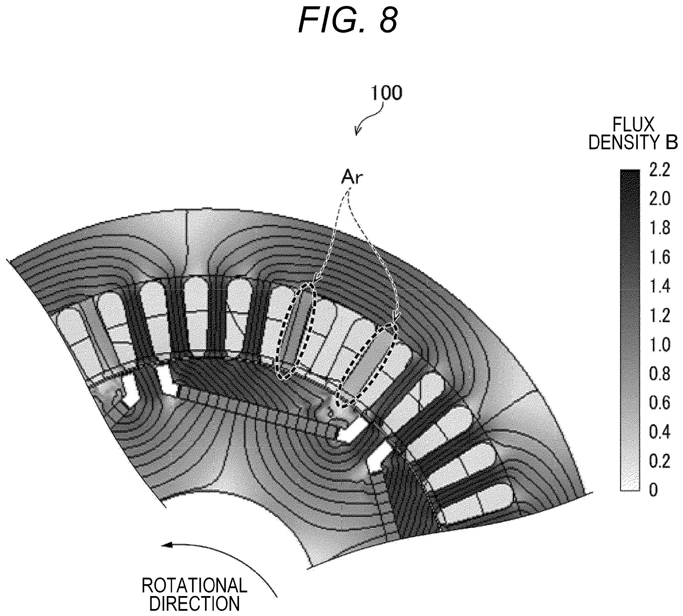

Flux density distribution of the motor 100 according to the embodiment is described with reference to Figs. 7 to 11, using the motor 100' according to the first reference example for comparison. Fig. 7 illustrates the flux density distribution of the motor 100' used in the first reference example during low-load conditions. Fig. 8 illustrates the flux density distribution of the motor 100 according to the embodiment during low-load conditions. Note that Figs. 7 and 8 illustrate the flux density distribution during low-load conditions where the torque T is equal to or less than half the maximum torque Tmax.

As illustrated in Fig. 7, during low-load conditions of the motor 100' according to the first reference example, for example, the magnetic flux passes through the tooth 11a in a region Ar at fixed flux density. This is because the teeth 11a include the non-oriented electromagnetic steel plate. In other words, as can be seen from Fig. 3, even when the magnetic field strength H is low, the flux density B is high. However, if the motor 100' rotates in a counterclockwise direction, relative to a rotational direction, the magnetic flux flowing through the tooth 11a in a region Ar' located on the left of the region Ar in the page of Fig. 7 contributes to the torque T. On the other hand, the magnetic flux flowing through the tooth 11a in the region Ar does not contribute to the torque T and can become a cause of iron loss or a counter electromotive force.

In contrast, as illustrated in Fig. 8, during low-load conditions of the motor 100 according to the embodiment, for example, the flux density is limited in the tooth 11a in the region Ar. This is because the teeth 11a include the non-linear soft magnetic material. In other words, as can be seen from Fig. 3, the flux density B is very low at the low magnetic field strength H such as the rising magnetic field Hk. In this manner, the use of the non-linear soft magnetic material allows limiting the magnetic flux that does not contribute to the torque T on the motor 100'. In this manner, the efficiency $\mu$ can be improved.

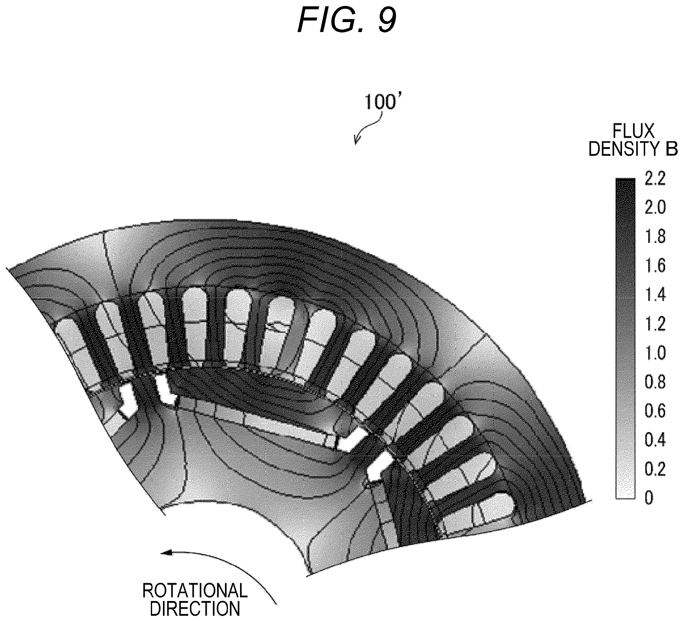

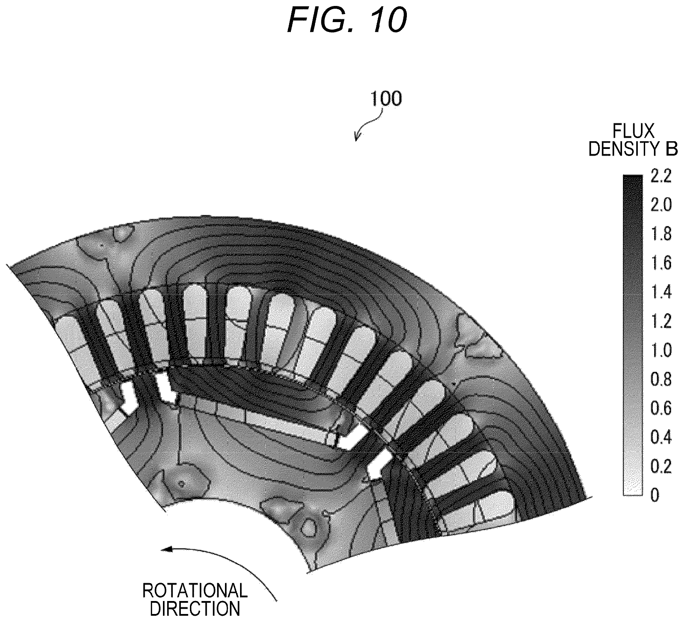

Fig. 9 illustrates the flux density distribution of the motor 100' used in the first reference example during high-load conditions. Fig. 10 illustrates the flux density distribution of the motor 100 according to the embodiment during high-load conditions. Figs. 7 to 10 illustrate the distribution of the flux density B by density levels. Figs. 9 and 10 illustrate the flux density distribution during high-load conditions where the torque T is greater than half the maximum torque Tmax.

As illustrated in Figs. 9 and 10, the motor 100' used in the first reference example substantially agrees in flux density distribution during high-load conditions with the motor 100 according to the embodiment. This is because the flux density B is sufficiently high and has reached the saturation flux density Bs at the magnetic field strength H greater than the rising magnetic field Hk. In other words, the flux density B has reached flux density required for the maximum torque Tmax of the motor 100' and the motor 100. Therefore, it is possible to suppress a reduction in the maximum torque Tmax.

In this manner, in terms of the motor 100 according to the embodiment, during low-load conditions, the magnetic flux is limited and the efficiency $\mu$ is improved without adding an external circuit. On the other hand, the maximum torque Tmax is maintained during high-load conditions. In this manner, the variable flux effect can be exerted.

Relationship Between Magnetic Properties of Non-linear Soft Magnetic Materials and Motor Efficiency

Fig. 11 is a graph illustrating B-H curves of a plurality of non-linear soft magnetic materials having different magnetic properties. Fig. 11 illustrates B-H curves of four types of non-linear soft magnetic materials S1 to S4 having different magnetic properties. A rising magnetic field Hk1 of the non-linear soft magnetic material S1, a rising magnetic field Hk2 of the non-linear soft magnetic material S2, a rising magnetic field Hk3 of the non-linear soft magnetic material S3, and a rising magnetic field Hk4 of the non-linear soft magnetic material S4 increase in this order.

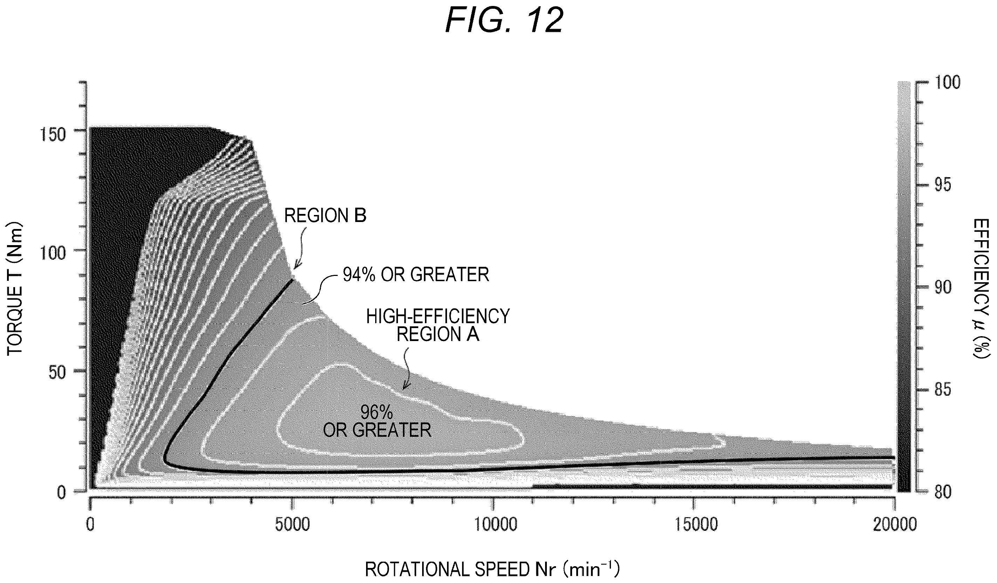

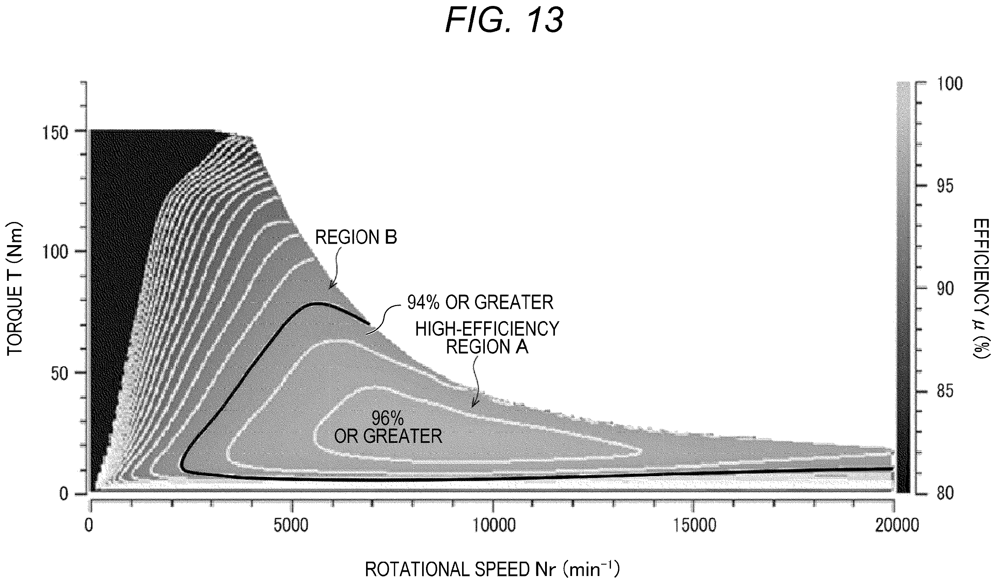

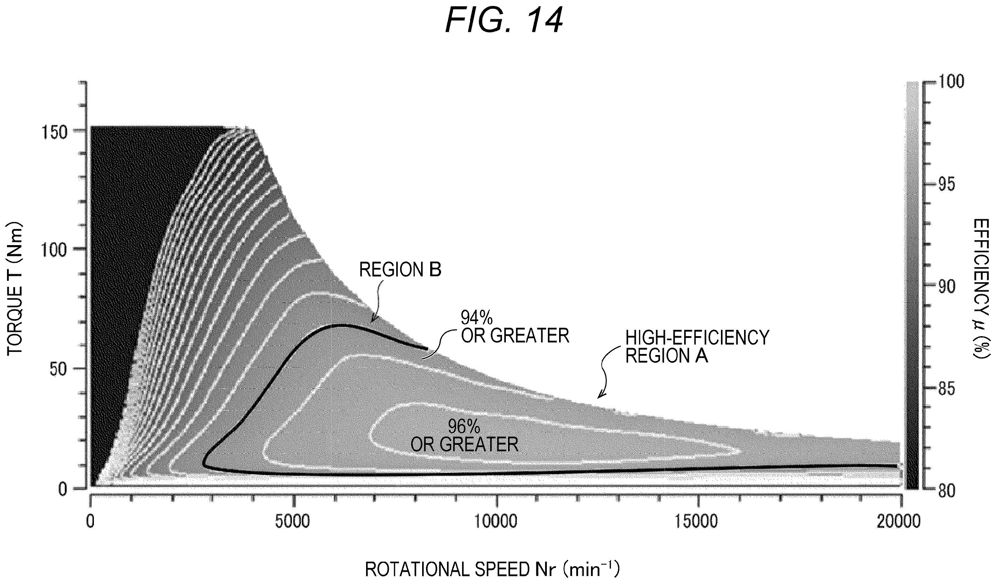

Figs. 12, 13, and 14 illustrate efficiency maps of the motor according to the embodiment which uses the non-linear soft magnetic materials S2, S3, and S4.

It can be confirmed from the efficiency maps illustrated in Figs. 12 to 14 that the range of the high-efficiency region A of the motor 100 using the non-linear soft magnetic materials for the teeth 11a is extended by comparison with Fig. 5 being the above-mentioned efficiency map of the motor 100' of the first reference example. As the rising magnetic field Hk increases, the range of the high-efficiency region A extends further. Moreover, it can be confirmed that as the rising magnetic field Hk increases, the high-efficiency region A extends further toward a high-speed range.

Non-linear Soft Magnetic Material

The non-linear soft magnetic material used for the motor is described. Electromagnetic steel plates include "grain-oriented electromagnetic steel plates" that have aligned orientations of magnetism, and "non-oriented electromagnetic steel plates" that have random orientations of magnetism. The orientations of magnetism depend on whether or not the orientations of the axis of easy magnetization of a crystal structure of iron ions forming a steel plate are aligned. Here, the axis of easy magnetization indicates a direction in which magnetization is easy. Note that the back yoke 11b and teeth 11a of the motor 100' used in the reference example illustrated in Fig. 1 and the back yoke 11b of the motor 100 according to the embodiment illustrated in Fig. 2 include the non-oriented electromagnetic steel plate.

Moreover, according to "Physics of Ferromagnetism, Vol. II - Magnetic Characteristics and Engineering Application -" (Soshin Chikazumi. Shokabo Co., Ltd.), the direction of magnetization is constrained by the orientation of the spin of an iron atom Fe placed at the center in a single crystal model of iron with a body-centered cubic lattice structure. Here, the position of the iron atom Fe placed at the center is defined as an origin O' of XYZ coordinates. In addition, the [001] direction of the coordinates is defined as the direction of the axis of easy magnetization of the single crystal model. Furthermore, the [110] direction is defined as the direction of the axis of hard magnetization of the single crystal model. Moreover, the direction of magnetization being an angle formed by the direction of the axis of easy magnetization and a direction in which an external magnetic field acts is expressed as $\theta$. Note that the axis of hard magnetization indicates a direction in which magnetization is difficult. If an excitation magnetic field Hex acts on the single crystal model in the [110] direction, a magnetization vector Ms constrained in the [001] direction of the axis of easy magnetization rotates to the [110] direction. At this point in time, anisotropic energy in a plane including the origin O', the [001] direction, and the [110] direction can be expressed by use of a primary magnetic anisotropic energy constant K1 and a secondary magnetic anisotropic energy constant K2. The primary magnetic anisotropic energy constant K1 and the secondary magnetic anisotropic energy constant K2 are constants determined according to the substance. For example, the primary magnetic anisotropic energy constant K1 of pure iron is 47200 J/m$^3$. Moreover, the secondary magnetic anisotropic energy constantK2 of pure iron is -750 J/m$^3$. The magnetic properties in the direction of the axis of hard magnetization are calculated using these values to calculate the rising magnetic field Hk at 6000 A/m. Note that the rising magnetic field Hk is defined as the magnetic field strength H of when the flux density B reaches 25% of the saturation flux density Bs.

In this manner, an appropriate material is selected for the non-linear soft magnetic material. Therefore, it is possible to control the direction of magnetocrystalline anisotropy, making use of the properties of the axis of hard magnetization. Consequently, it is possible to obtain desired magnetic properties. For example, in the stator core 11 of the motor 100 according to the embodiment illustrated in Fig. 2, the teeth 11a include the non-linear soft magnetic material. In addition, the back yoke 11b includes the non-oriented electromagnetic steel plate. Other than that, the teeth 11a and the back yoke 11b may include a grain-oriented electromagnetic steel plate. In this case, the teeth 11a and the back yoke 11b are placed in such a manner that radial direction of the teeth 11a and the back yoke 11b is the axis of hard magnetization and a circumferential direction thereof is the axis of easy magnetization. Moreover, while the back yoke 11b may include the non-oriented electromagnetic steel plate, the teeth 11a may include single crystal metal of the body-centered cubic lattice structure. In this case, the single crystal metal is placed in such a manner that the radial direction of the teeth 11a is the axis of hard magnetization and the circumferential direction is the axis of easy magnetization. Consequently, the magnetic properties of the teeth 11a can be made non-linear. Moreover, it is possible to achieve a variable flux motor of a variable reluctance type having high maximum torque. Desired properties for the non-linear soft magnetic material are obtained by selecting an appropriate substance and controlling the direction of magnetocrystalline anisotropy. In this manner, the non-linear soft magnetic material may be a material of which the magnetic properties have anisotropy. Note that it is preferable that the rising magnetic field of the non-linear soft magnetic material be equal to or greater than 100 A/m. Here, the rising magnetic field is defined as the magnetic field strength of when the flux density B reaches 25% of the saturation flux density on the B-H curve. If the non-linear soft magnetic material has the direction of hard magnetization and the direction of easy magnetization, it is preferable that the rising magnetic field in the direction of hard magnetization be equal to or greater than 100 A/m.

Stator Core Divided Structure

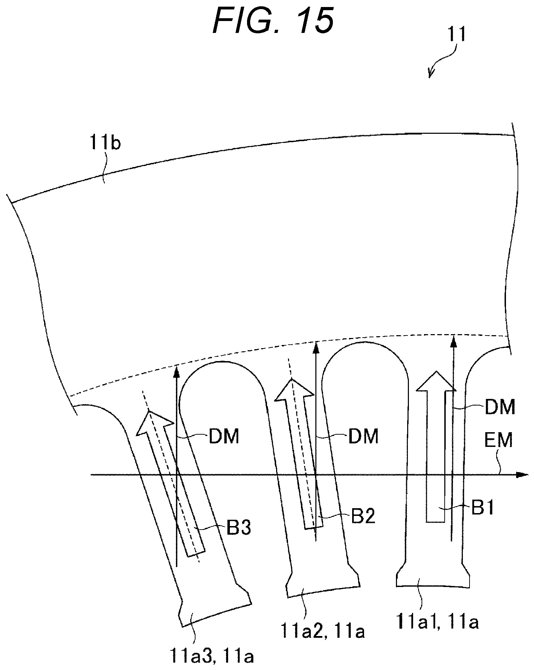

Note that in the described example in the above-mentioned embodiment, each of the teeth 11a includes the non-linear soft magnetic material. In addition, the back yoke 11b includes the non-oriented electromagnetic steel plate. However, the embodiment is not limited to this example. The stator core 11 may include a plurality of stator core pieces divided equally in the circumferential direction. Fig. 15 is a horizontal partial cross-sectional view of the stator core pieces of a motor according to a modification of the embodiment, which is orthogonal to the rotation axis.

As illustrated in Fig. 15, a plurality of stator core divided bodies integrally including a plurality of teeth 11a1, 11a2, and 11a3 and the back yoke 11b may form a stator. In terms of the illustrated stator core divided bodies, the stator core divided bodies include a grain-oriented electromagnetic steel plate. A direction DM of the axis of hard magnetization of the grain-oriented electromagnetic steel plate is set in a direction substantially parallel to the radial directions of the teeth 11a1, 11a2, and 11a3. Also with such a configuration, high flux density does not occur unless a certain magnitude of magnetic field strength acts if the magnetic field in the direction DM of the axis of hard magnetization acts on the teeth 11a1, 11a2, and 11a3. In other words, non-linear magnetic properties of the teeth 11a1, 11a2, and 11a3 can be achieved. Such a configuration also enables achieving a variable flux motor of a variable reluctance type having high maximum torque.

Note that the teeth 11a1, 11a2, and 11a3 extend in directions different from each other. Hence, strictly speaking, the directions in which the teeth 11a1, 11a2, and 11a3 extend may not agree with the direction DM of the axis of hard magnetization. Here, the direction of the magnetic flux from the rotor magnet 23 (refer to Fig. 2) acting on the tooth 11a1 is defined as B1. The direction of the magnetic flux from the rotor magnet 23 acting on the tooth 11a2 is defined as B2. The direction of the magnetic flux from the rotor magnet 23 acting on the tooth 11a3 is defined as B3. Then, it is possible to cause the direction DM of the axis of hard magnetization to agree with the magnetic flux direction B1. However, neither the magnetic flux direction B2 nor the magnetic flux direction B3 can be caused to agree with the direction DM of the axis of hard magnetization. In other words, when a certain moment is focused on, it is assumed that the flux density B has reached the saturation flux density Bs in the tooth 11a1, but the flux density B has not reached the saturation flux density in neither the tooth 11a2 nor the tooth 11a3. In this manner, a plurality of teeth having different flux densities from each other can become a cause of the generation of the sixth harmonic ripple component of the torque T. Note that the sixth harmonic ripple component can be a cause of deterioration of motor controllability, vibration, or noise.

Hence, when it is desired to further reduce torque ripple, if the stator core 11 includes the plurality of stator core pieces divided equally in the circumferential direction, the stator core 11 can be configured in such a manner that D and N satisfy a relation of formula (4) where D is the number of divisions of the stator core pieces in a region P (refer to Fig. 2) corresponding to each pole pair of the motor, and N is an arbitrary natural number.

$$D = 6N \quad \text{Formula (4)}$$

Consequently, 6N fluctuations in permeance can be given. In addition, the sixth harmonic ripple component of the torque T can be reduced.

Up to this point the embodiment has been described. However, it is needless to say that the technical scope of the embodiment should not be construed in a limited manner by the above-mentioned detailed description. The described embodiment is a mere example. Those skilled in the art understand that the above-described embodiment can be modified in various manners within the scope of the disclosure of the claims. The technical scope of the embodiment should be determined on the basis of the scope of the disclosure of the claims and the scope of equivalents thereof.

For example, the motor according to the described embodiment has the structure of six poles, 45 slots, and three phases, and distributed winding. However, the embodiment is not limited thereto, and the motor according to the embodiment may have a structure of four poles, six slots, and three phases, and concentrated winding. Moreover, the motor according to the described embodiment has an interior permanent magnet synchronous motor (IPMSM) structure. However, the motor according to the embodiment may have a surface permanent magnet synchronous motor (SPMSM) structure. Furthermore, the motor according to the described embodiment is a synchronous motor to which a magnetomotive force of a permanent magnet is applied. However, the motor according to the embodiment may be an induction motor to which a magnetomotive force based on an induced current is applied.

Moreover, if the teeth include the non-linear soft magnetic material, the back yoke may include a non-oriented electromagnetic steel plate. Alternatively, the back yoke may include a grain-oriented electromagnetic steel plate having a direction of the axis of hard magnetization set in a circumferential direction of the back yoke. Alternatively, the teeth and the back yoke may include a grain-oriented electromagnetic steel plate having a direction of the axis of hard magnetization set in a circumferential direction of the teeth and the back yoke. Moreover, the back yoke 11b may include a non-oriented electromagnetic steel plate. Alternatively, while only a part of the teeth of the stator may include a non-linear soft magnetic material, the other part including the teeth may include a linear soft magnetic material.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1. A variable flux motor being a synchronous or induction motor, comprising:

   a stator; and
   a rotor, wherein
   the stator includes: a stator core; and a winding wound around the stator core, and
   at least a part of the stator comprises a non-linear soft magnetic material.

2. The variable flux motor according to claim 1, wherein

   the stator core includes a teeth portion, and a back yoke portion, and
   at least a part of the teeth portion comprises the non-linear soft magnetic material.

3. The variable flux motor according to claim 1, wherein the non-linear soft magnetic material has a magnetic property having an orientation.

4. The variable flux motor according to claim 1, wherein the non-linear soft magnetic material is a metal single crystal.

5. The variable flux motor according to claim 1, wherein

   the rotor includes a permanent magnet, or an electromagnet, and
   the non-linear soft magnetic material has a magnetic property 1 or a magnetic property 2 below:

   magnetic property 1: flux density of the permanent magnet, or flux density of the electromagnet obtained upon application of a magnetomotive force, is equal to or less than 30% of saturation flux density, and
   magnetic property 2: the flux density obtained upon application of a maximum magnetomotive force from the winding is equal to or greater than 80% of the saturation flux density.

6. The variable flux motor according to claim 1, wherein

   magnetic field strength obtained upon flux density reaches 25% of saturation flux density on a B-H curve of the non-linear soft magnetic material in a direction of hard magnetization is defined as a rising magnetic field Hk, and the rising magnetic field Hk is equal to or greater than 100 A/m.

7. The variable flux motor according to claim 1, wherein

   the stator core includes a plurality of stator core pieces divided in a circumferential direction, and
   the number D of divisions of the plurality of stator core pieces corresponding respectively to pole pairs and an arbitrary natural number N satisfy a relation of D = 6N.

8. The variable flux motor according to claim 1, wherein

   magnetic field strength obtained upon flux density reaches saturation flux density on a B-H curve of the non-linear soft magnetic material in a direction of hard magnetization is defined as a rising magnetic field Hk,
   magnetic field strength of a permanent magnet of the rotor is set at less than the rising magnetic field Hk, and
   a sum of the magnetic field strength of the permanent magnet and maximum magnetic field strength of the winding is set to be equal to or greater than magnetic field strength obtained upon the flux density reaching the saturation flux density.

# FIG. 1

# FIG. 2

FIG. 3

—— NON-LINEAR SOFT MAGNETIC MATERIAL

------ LINEAR SOFT MAGNETIC MATERIAL

Bs
Bc
Ba'
Ba
Bb

0

Hb Ha Hk  Hc  Hs

FLUX DENSITY B

*FIG. 4A*

*FIG. 4B*

*FIG. 4C*

FIG. 5

*FIG. 6*

# FIG. 7

# FIG. 8

100

Ar

FLUX
DENSITY B

2.2
2.0
1.8
1.6
1.4
1.2
1.0
0.8
0.6
0.4
0.2
0

ROTATIONAL
DIRECTION

# FIG. 9

## FIG. 10

FLUX
DENSITY B

2.2
2.0
1.8
1.6
1.4
1.2
1.0
0.8
0.6
0.4
0.2
0

ROTATIONAL
DIRECTION

# FIG. 11

EP 4 686 044 A1

NON-LINEAR SOFT MAGNETIC MATERIAL

NON-ORIENTED ELECTROMAGNETIC STEEL PLATE

## FIG. 12

REGION B

94% OR GREATER

HIGH-EFFICIENCY
REGION A

96%
OR GREATER

TORQUE T (Nm)

ROTATIONAL SPEED Nr (min⁻¹)

EFFICIENCY μ (%)

EP 4 686 044 A1

# FIG. 13

*FIG. 14*

EFFICIENCY μ (%)

100
95
90
85
80

REGION B

HIGH-EFFICIENCY REGION A

94% OR GREATER

96% OR GREATER

TORQUE T (Nm)

150
100
50
0

ROTATIONAL SPEED Nr (min⁻¹)

0　5000　10000　15000　20000

# FIG. 15

FIG. 16

Europäisches
Patentamt
European
Patent Office
Office européen
des brevets

# EUROPEAN SEARCH REPORT

**Application Number**

EP 25 18 3764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0160457 A (HYUNDAI MOTOR CO LTD [KR]; KIA CORP [KR] ET AL.) 24 November 2023 (2023-11-24) | 1-7 | INV. H02K1/02 H02K1/14 |
| A | * paragraphs [0022] - [0024]; figures 1, 2, 4-6 * | 8 | ADD. H02K29/03 |
| X | JP 2024 001799 A (JFE STEEL CORP) 10 January 2024 (2024-01-10) * paragraph [0009]; figures 1, 2, 3 * | 1,2,6,7 | |
| X | US 2004/135459 A1 (TOYO TESSIN KOGYO CO LTD [JP]; IIJIMA NOBUNAGA [JP] ET AL.) 15 July 2004 (2004-07-15) * paragraphs [0008], [0015]; figure 1 * | 1,4 | |
| X | US 2022/109335 A1 (VOLBERS NIKLAS [DE]) 7 April 2022 (2022-04-07) * paragraph [0003]; figure 7 * | 1 | |
| X | EP 3 816 312 A1 (JFE STEEL CORP [JP]) 5 May 2021 (2021-05-05) * paragraph [0029]; figures 1, 2 * | 1,2,4,5 | **TECHNICAL FIELDS SEARCHED (IPC)** H02K |

The present search report has been drawn up for all claims

| Place of search | Date of completion of the search | Examiner |
|---|---|---|
| The Hague | 3 November 2025 | Van de Maele, Wim |

EPO FORM 1503 03.82 (P4C01)

## ANNEX TO THE EUROPEAN SEARCH REPORT
## ON EUROPEAN PATENT APPLICATION NO.

EP 25 18 3764

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | | Publication date | Patent family member(s) | | Publication date |
|---|---|---|---|---|---|
| KR 20230160457 | A | 24-11-2023 | NONE | | |
| JP 2024001799 | A | 10-01-2024 | JP | 7718334 B2 | 05-08-2025 |
| | | | JP | 2024001799 A | 10-01-2024 |
| US 2004135459 | A1 | 15-07-2004 | AU | 2003303707 A1 | 10-08-2004 |
| | | | JP | 2004328986 A | 18-11-2004 |
| | | | KR | 20050088925 A | 07-09-2005 |
| | | | US | 2004135459 A1 | 15-07-2004 |
| | | | US | 2005206267 A1 | 22-09-2005 |
| | | | WO | 2004064228 A1 | 29-07-2004 |
| US 2022109335 | A1 | 07-04-2022 | DE | 102020125897 A1 | 07-04-2022 |
| | | | US | 2022109335 A1 | 07-04-2022 |
| | | | US | 2025105681 A1 | 27-03-2025 |
| EP 3816312 | A1 | 05-05-2021 | CA | 3100302 A1 | 21-11-2019 |
| | | | CN | 112119173 A | 22-12-2020 |
| | | | EP | 3816312 A1 | 05-05-2021 |
| | | | JP | 6878351 B2 | 26-05-2021 |
| | | | JP | 2019199624 A | 21-11-2019 |
| | | | KR | 20210003797 A | 12-01-2021 |
| | | | TW | 201947040 A | 16-12-2019 |
| | | | US | 2021125759 A1 | 29-04-2021 |
| | | | WO | 2019220770 A1 | 21-11-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017017783 A